# EUROPÄISCHE PATENTANMELDUNG

(11) **EP 2 161 090 A2**
(43) Veröffentlichungstag der Anmeldung: **10.03.2010**
(21) Anmeldenummer: 09011529.6
(22) Anmeldetag: 09.09.2009
(51) Int. Cl.: B23B 51/10

(54) **Entgratmesser zum Entgraten von ebenen und unebenen Bohrungsrändern**

(30) Priorität: 09.09.2008 DE 102008046489
(71) Anmelder: Heule, Ulf, 9436 Balgach (CH)
(72) Erfinder: Heule, Heinrich, 9434 Au SG (CH)
(74) Vertreter: Riebling, Peter

(57) **Zusammenfassung**

Entgratmesser zum Entgraten von Bohrungsrändern gerader oder unrunder Form mit einem um seine Längsachse drehbar angetriebenen Grundkörper, in dem ein oder mehrere Stabmesser in einem im Grundkörper drehbar gelagerten Messerhalter auswechselbar aufgenommen sind, wobei der Messerhalter mindestens eine am Umfang angeordnete Steuerausnehmung aufweist, in welcher ein Federelement eingreift und die Verdrehung des Messerhalters im Grundkörper steuert, dadurch gekennzeichnet, dass der Messerhalter zwei senkrecht zur Aufnahmebohrung des Stabmessers fluchtend einander gegenüberliegend angeordnete Bohrungen aufweist, in die jeweils das eine Ende eines Lagerbolzens eingreift, dessen jeweiliges anderes Ende in einer Querbohrung im Grundkörper aufgenommen ist und der Drehlagerung des Messerhalters im Grundkörper dient,
und dass das eine oder mehrere Stabmesser dadurch leicht auswechselbar in der radialen Aufnahmebohrung im Messerhalter gelagert ist, dass mindestens ein die axiale Verschiebung begrenzender Anschlag und eine in axialer Richtung sichernde Auszugssicherung für das Stabmesser angeordnet sind.

## Beschreibung

Gegenstand der Erfindung ist ein Entgratmesser zum Entgraten von ebenen und unebenen Bohrungsrändern nach dem Oberbegriff des Patentanspruchs 1.

Ein solches Entgratmesser ist mit der DE 40 08 533 A1 bekannt geworden, auf deren Offenbarungsinhalt Bezug genommen wird. Deren Offenbarung soll vollständig in die Offenbarung der vorliegenden Erfindung aufgenommen werden.

Es handelt sich hierbei um ein Entgratwerkzeug zum Entgraten von Bohrungsrändern gerader oder unrunder Form mit einem um seine Längsachse drehbar angetriebenen Grundkörper, in dem ein oder mehrere Stabmesser radial verstellbar angeordnet sind.

Das eine oder die mehreren Stabmesser sind im Messerhalter auswechselbar aufgenommen. Der Messerhalter weist mindestens eine am Umfang angeordnete Steuerausnehmung auf, in welcher ein Federelement eingreift, welches die Verdrehung des Messerhalters steuert.

Ferner wird auf die US 5 135 338 B verwiesen, deren Offenbarung ebenfalls vom Offenbarungsinhalt der vorliegenden Erfindung vollständig umfasst sein soll.

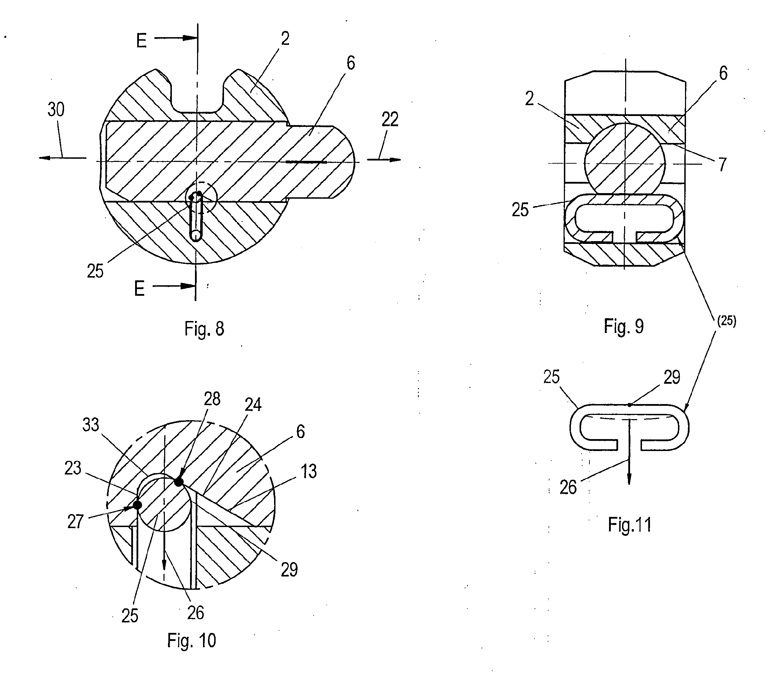

In den dortigen Figuren 10 bis 15 ist ein auswechselbares Stabmesser beschrieben, welches in einer radialen Bohrung eines Messerhalters dadurch gelagert ist, dass es von einem Querbolzen durchgriffen ist.

Nachteil dieser Anordnung ist jedoch, dass der mit dem Bezugszeichen 41 bezeichnete Querbolzen sowohl der Lagerung des Stabmessers als auch der Drehlagerung des Messerhalters 40 dient. Damit besteht der Nachteil, dass zum Auswechseln eines Stabmessers zunächst der Querbolzen 41 herausgeschlagen werden muss, wodurch auch der Messerhalter 40 aus seiner Aufnahme im Werkzeughalter herausfällt.

Erst jetzt kann das Stabmesser aus der Ausnehmung im Messerhalter herausgenommen werden. Schwieriger ist jedoch die Montage eines Stabmessers in einem solchen Messerhalter. Hierzu ist es erforderlich, dass die Querbohrung im Stabmesser in Übereinstimmung mit der Querbohrung im Messerhalter gebracht wird und die beiden Teile in die Werkzeugaufnahme am Werkzeughalter eingebracht werden, wodurch dann erst der Querbolzen in den Messerhalter hineingeschlagen werden kann, der somit dann auch das Stabmesser durchdringt und lagert.

Damit besteht der wesentliche Nachteil, dass praktisch drei unterschiedliche Teile zur Deckung gebracht werden müssen, um das Stabmesser in dem Messerhalter zu befestigen.

Weitere Nachteile der bekannten Ausführungsform ist, dass in dem aus einem hoch gehärteten Stahl bestehenden Stabmesser eine Querbohrung angebracht werden muss. Dies ist mit hohem Arbeitsaufwand verbunden, denn eine solche Querbohrung kann nur durch einen Erodiervorgang eingebracht werden.
Weiterhin besteht der Nachteil, dass eine solche Querbohrung das Stabmesser stark schwächt, so dass es keine hohen Dreh- und Biegemomente mehr übertragen kann.

Insgesamt besteht also beim Stand der Technik der Nachteil, dass ein solches Entgratwerkzeug nur mit relativ hohem Kostenaufwand hergestellt werden kann.

Der Erfindung liegt deshalb die Aufgabe zu Grunde ein Entgratmesser nach dem Gegenstand der DE 40 08 533 A1 oder der US 5 135 338 B so weiter zu bilden, dass das Stabmesser wesentlich einfacher, stabiler und kostengünstiger im Werkzeughalter gelagert werden kann und dass das Entgratwerkzeug mit wesentlich geringeren Kosten hergestellt werden kann.

Zur Lösung der gestellten Aufgabe ist die Erfindung durch die technische Lehre des Anspruches 1 gekennzeichnet.

Wesentliches Merkmal der vorliegenden Erfindung ist, dass das Stabmesser in einer Aufnahmebohrung des Messerhalters dadurch gelagert ist, dass der Messerhalter zwei senkrecht zur Aufnahmebohrung des Stabmessers verlaufende Querbohrungen aufweist, in die jeweils ein Lagerbolzen eingreift, der die Drehlagerung mit dem Grundkörper ausführt und dass ferner das Messer dadurch leicht einsteckbar in die radiale Aufnahmebohrung im Messerhalter gelagert ist, dass mindestens ein Positionierbolzen an mindestens einer Anschlagkante am Stabmesser anliegt und im übrigen am Messerhalter im Bereich der Aufnahmebohrung für die Halterung des Stabmessers eine in axialer Richtung sichernde Auszugssicherung angeordnet ist.

Im Unterschied zum Stand der Technik gibt es nun nicht mehr einen einzigen Querbolzen, der sowohl der Drehlagerung des Messerhalters als auch der Halterung des Stabmessers dient. Stattdessen wird der Querbolzen durch zwei kürzere, zueinander fluchtend gegenüberliegend angeordnete Querbolzen ersetzt.

Diese beiden Querbolzen übernehmen nun auch die Drehlagerung des Messerhalters im Grundkörper. Sie dienen jedoch nicht mehr der Halterung des Stabmessers im Messerhalter, wie es beim Stand der Technik bekannt war. Stattdessen wird das Stabmesser nur noch in die Aufnahmebohrung am Messerhalter eingeschoben und mit einem Verschiebungsanschlag und einer Auszugssicherung in dieser Aufnahmebohrung gehalten.

Bei der gegebenen technischen Lehre ergibt sich der Vorteil, dass ein solches Stabmesser kostengünstiger hergestellt werden kann, denn es entfällt die sehr aufwendig herzustellende Querbohrung für den Lagerbolzen nach dem Stand der Technik und das Stabmesser ist damit um den Faktor ½ kostengünstiger als vergleichsweise ein Stabmesser nach dem Gegenstand der US 5 135 338 B.

In der folgenden Beschreibung wird aus Vereinfachungsgründen davon ausgegangen, dass lediglich ein einziges Stabmesser vorhanden ist. Hierauf ist die Erfindung jedoch nicht beschränkt. Es kann auch vorgesehen sein, dass zwei oder mehrere Stabmesser auswechselbar im Messerhalter gelagert sind. Diese Stabmesser können parallel oder im Winkel zueinander und im gegenseitigen Abstand im Messerhalter angeordnet werden. Ebenso ist es möglich, ein einziges Stabmesser mit zwei gegenüberliegenden Köpfen und dort jeweils angeordneten Schneidkanten zu verwenden. Die Erwähnung lediglich nur eines Stabmessers dient also nur der einfacheren Beschreibung.

Vorteil der Erfindung ist, dass das Stabmesser nun leicht auswechselbar in seiner Aufnahmebohrung im Messerhalter gelagert ist, denn es legt sich lediglich mit mindestens einer Anschlagkante an einer zugeordneten Anschlagkante am Messerhalter an.

In einer bevorzugten Ausführungsform der vorliegenden Erfindung ist die messerhalterseitige (gehäuseseitige) Anschlagkante durch einen Positionierbolzen gebildet, der sich an einer zugeordneten Anschlagkante an der Rückseite des Stabmessers anlegt.

Hierauf ist die Erfindung jedoch nicht beschränkt.

In einer anderen Ausgestaltung der Erfindung kann es vorgesehen sein, dass am Stabmesser eine Kerbe angeordnet ist und in diese Kerbe die Spitze einer Madenschraube eingreift, welche in einer zugeordneten Gewindebohrung im Messerhalter einschraubbar ist. Auf diese Weise kann das Stabmesser ebenfalls durch eine solche Madenschraube gehalten werden.

Es wird zwar bevorzugt, wenn der Verschiebungsanschlag am hinteren Ende des Stabmessers angeordnet ist. Hierauf ist die Erfindung jedoch nicht beschränkt. In einer anderen Ausgestaltung kann der gehäuseseitige Verschiebungsanschlag an einer beliebigen Anschlagkante im Bereich des Stabmessers (irgendwo) anschlagen und hierdurch die Einschubbewegung begrenzen, sowie die Endlage des Stabmessers festlegen.

Ebenso ist es möglich, statt einer Madenschraube deren zwei zu verwenden, wobei die eine Madenschraube der Auszugssicherung des Stabmessers in axialer Richtung und die andere Madenschraube als axialer Anschlag für das Einschieben des Stabmessers in die Aufnahmebohrung dient.

In einer bevorzugten Ausgestaltung der vorliegenden Erfindung ist die Auszugssicherung jedoch bevorzugt als Federstab ausgebildet, der frei federnd in einer Querbohrung gelagert ist, welche Querbohrung etwa parallel zu den beiden Bohrungen für die Lagerbolzen zur Halterung des Messerhalters ausgebildet ist.

In dieser Querbohrung ist ein Federstab eingesteckt, der mit zugeordneten scheibenförmigen Federstablagern links- und rechtseitig gelagert ist, so dass er sich mittig durchbiegen kann.

Er liegt mittig an der Unterseite des Stabmessers an und greift dort federnd in eine Kerbe an der Unterseite des Stabmessers ein, so dass der Federstab unter Federvorspannung in diese Kerbe eingreift und hierdurch eine axiale Auszugssicherung für das Stabmesser bildet.

Wie bereits schon ausgeführt, kann statt der federnden Auszugssicherung auch eine Madenschraube verwendet werden, wobei die Gewindebohrung der Madenschraube senkrecht zur Querbohrung zur Halterung des Federstabes verläuft.

Der Federstab kann auch durch andere Federmittel ersetzt werden, wie z. B. durch Kompressionsfedern, durch elastische Einsätze und dergleichen mehr, weil es nur darauf ankommt, eine möglichst einfache axiale Auszugssicherung für das Stabmesser zu gewährleisten.

Der Federstab muss nicht notwendigerweise aus einem metallischen Federmaterial bestehen. Er kann auch als elastisch biegbarer Kunststoffstab ausgebildet sein. Es können auch anstatt der hier beschriebenen Biegefeder andere Federmittel, wie zum Beispiel Schenkelfedern, Schraubendruckfedern und dergleichen verwendet werden.

In einer dritten Ausgestaltung ist es möglich, dass eine Schraubendruckfeder nicht direkt auf die unterseitige Kerbe am Umfang des Stabmessers eindrückt, sondern dass eine Indexkugel vorhanden ist, die von der Schraubendruckfeder federvorgespannt in die zugeordnete Kerbe an der Unterseite des Stabmessers eingreift.

In einer vierten Ausgestaltung ist vorgesehen, dass die Haltekerbe am Stabmesser durch eine "Snap"-Nute ersetzt ist. Mit einer einfachen C-förmigen Feder kann das Stabmesser in dieser Nute positioniert werden. Diese Kombination beinhaltet den Einschub-begrenzenden Anschlag und die Auszugssicherung in einem einzigen Bauteil. Das Stabmesser müsste in diesem Fall sogar nach hinten (entgegen der Auszugsrichtung) heraus gestoßen werden.

Die Auswechslung des erfindungsgemäßen Stabmessers im Messerhalter ist nun bei allen vier beschriebenen Ausführungsformen besonders einfach. Zur Auswechslung reicht es nämlich aus, mit einem entsprechenden Hilfswerkzeug einfach am Stabmesser anzugreifen und das Stabmesser in Richtung seiner Längserstreckung aus der Aufnahmebohrung herauszuziehen. Ebenso ist es möglich, das Stabmesser von hinten herauszudrücken, weil die Aufnahmebohrung im Messerhalter den Messerhalter komplett durchsetzt und somit auch die rückseitige Stirnseite des Stabmessers von hinten her mit einem Werkzeug erreichbar ist, welches das Stabmesser nach vorne aus der Aufnahmebohrung herausdrückt.

In einer weiteren bevorzugten Ausgestaltung der vorliegenden Erfindung ist vorgesehen, dass die Aufnahmebohrung im Messerhalter nun nicht mehr als starre Aufnahmebohrung ausgebildet ist, sondern einen federnden Klemmspalt aufweist. Dadurch ist der Messerhalter mit seiner quer den Messerhalter durchsetzenden Aufnahmebohrung 20 als Klemmkörper ausgebildet. Dieser Klemmkörper weist einen etwa über eine axiale Länge von zwei Drittel der Gesamtlänge sich erstreckenden Klemmspalt auf, der den Messerhalter und die darin angeordnete Aufnahmebohrung in zwei einander zugeordnete und symmetrisch zueinander liegenden Klemmhälften unterteilt.

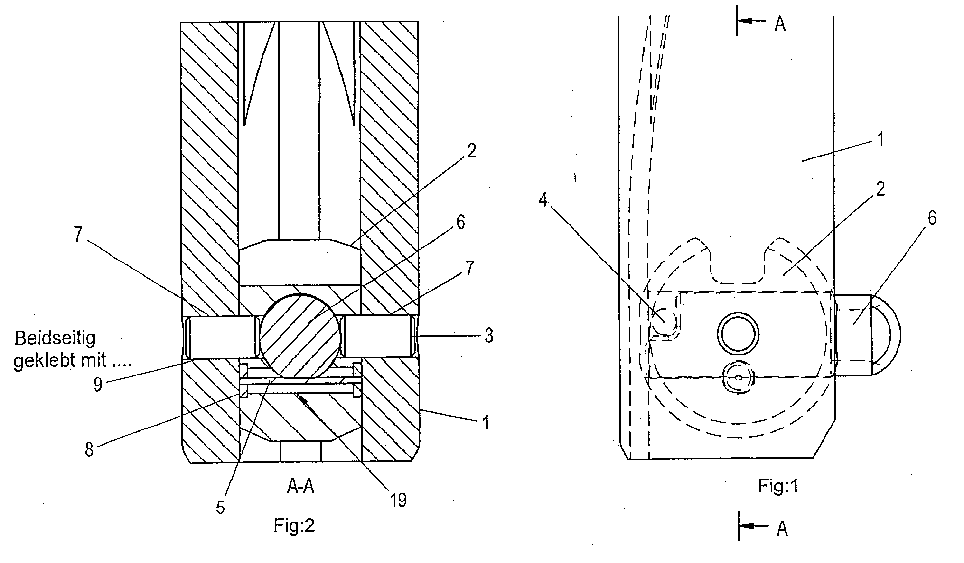

Beim Einstecken des Stabmessers wird somit der Klemmspalt auseinander gedrückt, weil der Außenumfang des Stabmessers geringfügig größer ist als der Innenumfang der klemmenden Aufnahmebohrung. Damit spreizt sich die Aufnahmebohrung unter der Federkraft der beiden einander gegenüberliegenden und federnd sich schließenden Klemmhälften, so dass das Stabmesser klemmend in der Aufnahmebohrung des Messerhalters aufgenommen wird. Damit besteht der Vorteil, dass die in den Ausführungsbeispielen nach den Figuren 1 bis 11 gezeigte Ausführung, die mit einem Federstablager arbeitet, entfallen kann. Bei dieser Ausführung entfällt das Federstablager vollkommen und wird durch den federnd ausgebildeten Messerhalter ersetzt.

Damit können wesentliche Einzelteile des Halters eingespart werden, und die Halterung des Entgratmessers ist einfacher und betriebssicherer.

Dadurch, dass das Federstablager entfallen kann, besteht nun der weitere Vorteil, dass der als Klemmkörper ausgebildete Messerhalter wesentlich kleiner ausgebildet werden kann, d. h. er kann miniaturisiert werden. Der AußenDurchmesser eines solchen klemmenden Messerhalters kann bis auf 4 mm minimiert werden, was bei den vorherigen Messerhaltern nach den Figuren 1 bis 11 nicht ohne Weiteres möglich ist, weil in diesen sehr kleinen Messerhaltern noch weitere Einzelteile (Federstablager) eingebaut werden mussten. Dies entfällt nach dieser Ausführungsform.

Die Größenangabe von 4 mm Durchmesser ist jedoch nicht beschränkend für das Ausführungsbeispiel zu verstehen, sondern sie soll nur einen Anhaltspunkt bieten, welche kleinen Stabmesser in einem solchen Messerhalter gelagert werden können. Es ist sogar möglich, den Durchmesser noch weiter zu verringern, weil es sich um einen einteiligen Körper handelt, in dem keine weiteren Einzelteile mehr eingebaut werden müssen, mit Ausnahme der Positionierbolzen und der Lagerbolzen.

Im Übrigen spielt es bei allen Ausführungsbeispielen der vorliegenden Erfindung keine Rolle, dass die Aufnahmebohrung zentrisch im Messerhalter angeordnet ist.

In einer anderen Ausgestaltung der Erfindung kann es auch vorgesehen sein, dass diese Aufnahmebohrung azentrisch ausgebildet ist, d. h. versetzt zur Mittenlängsachse im Messerhalter nach oben oder unten angeordnet ist.

In einer anderen Ausgestaltung der Erfindung kann es auch vorgesehen sein, dass der Klemmschlitz, welcher den Messerhalter in zwei symmetrisch zueinander angeordnete Klemmhälften trennt, nicht symmetrisch zur Längsmittenachse des Messerhalters angeordnet ist, sondern ebenfalls exzentrisch, z. B. nach oben oder unten in Richtung von der Längsmittenachse entfernt angeordnet ist. Die beiden Klemmhälften sind dann nicht mehr symmetrisch zueinander, sondern sind asymmetrisch.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Teilausschnitt aus einem Entgratwerkzeug mit einem Werkzeughalter, einen drehbar darin gelagerten Messerhalter und ein zugeordneten Stabmesser.
- Figur 2:: Schnitt gem. der Linie A-A in Figur 1.
- Figur 3:: Eine perspektivische Ansicht des Messerhalters.
- Figur 4:: Die Draufsicht auf den Messerhalter nach Figur 3.
- Figur 5:: Die Seitenansicht des Messerhalters nach Figur 3 und 4.
- Figur 6:: Der Schnitt gem. der Linie A-A in Figur 5 durch den Messerhalter.
- Figur 7:: Der Schnitt gem. der Linie B-B in Figur 4 durch den Messerhalter.
- Figur 8:: Ein Schnitt durch eine abgewandelte Ausführung mit einer Anschlagbegrenzung und Auszugssicherung in einem einzigen Bauteil
- Figur 9:: der um 90 Grad gedrehte Schnitt zu Figur 8
- Figur 10:: eine vergrößerte Detailansicht der Figur 8
- Figur 11:: eine vergrößerte Detaildarstellung der verwendeten C-förmigen Feder
- Figur 12:: ein Schnitt durch eine zweite Ausführungsform eines Messerhalters
- Figur 13:: der Schnitt gemäß Linien A-A in Figur 12
- Figur 14:: die perspektivische Ansicht des Messerhalters nach den Figuren 12 und 13
- Figur 15:: eine weitere Ausführungsform eines Messerhalters im Vergleich zu Figur 12
- Figur 16:: der Schnitt durch die Ausführung nach Figur 15 in Richtung der Linie A-A
- Figur 17:: eine perspektivische Ansicht des Messerhalters nach den Figuren 15 und 16

In den Figuren 1 und 2 ist allgemein ein Grundkörper 1 dargestellt, der Teil eines Entgratwerkzeuges ist, wobei der Grundkörper 1 eine Längsausnehmung 21 aufweist, in die der Messerhalter 2 eingesetzt und dort drehbar über zwei fluchtend einander gegenüber liegende, auswechselbar gehaltene Lagerbolzen 3 gelagert ist.

Der Messerhalter 2 ist bündig und formschlüssig, jedoch mit geringem radialem Spiel in die Längsausnehmung 21 des Grundkörpers drehbar gelagert.

Wie sich aus den Figuren 1 und 2 ergibt, ist ein Stabmesser 6 in eine querverlaufende Aufnahmebohrung 20 im Messerhalter 2 eingesteckt und dort gegen axiales Ausziehen mit Hilfe der Auszugssicherung 19 gesichert.

Zum Einschieben des Stabmessers 6 legt sich dieses in der Aufnahmebohrung 20 rückseitig mit zwei im Winkel von 90° zueinander ausgebildeten Anschlagkanten 16, 17 an einen zugeordneten Positionierbolzen 4 an.

Der Positionierbolzen bildet so eine hochlastübertragende axiale Anschlagsicherung für das Stabmesser 6, weil er einerseits der Verdrehsicherung und andererseits der Verschiebungssicherung des Stabmessers 6 in der Aufnahmebohrung 20 dient.

Die Auszugssicherung 19 ist im gezeigten Ausführungsbeispiel durch einen Federstab 5 gebildet, der in einer zugeordneten Querbohrung 12 im Messerhalter 2 mit radialem Spiel eingesteckt ist.

Das radiale Spiel wird dadurch erreicht, dass der Federstab beidseitig in zugeordneten Federstablagern 8 eingesteckt ist. Die Federstablager 8 sind als einfache Scheiben ausgebildet, die jeweils ein Ende des Federstabes 5 aufnehmen. Damit ist der Federstab 5 in der Querbohrung 12 wie eine mittig durchbiegbare Biegefeder federnd gelagert.

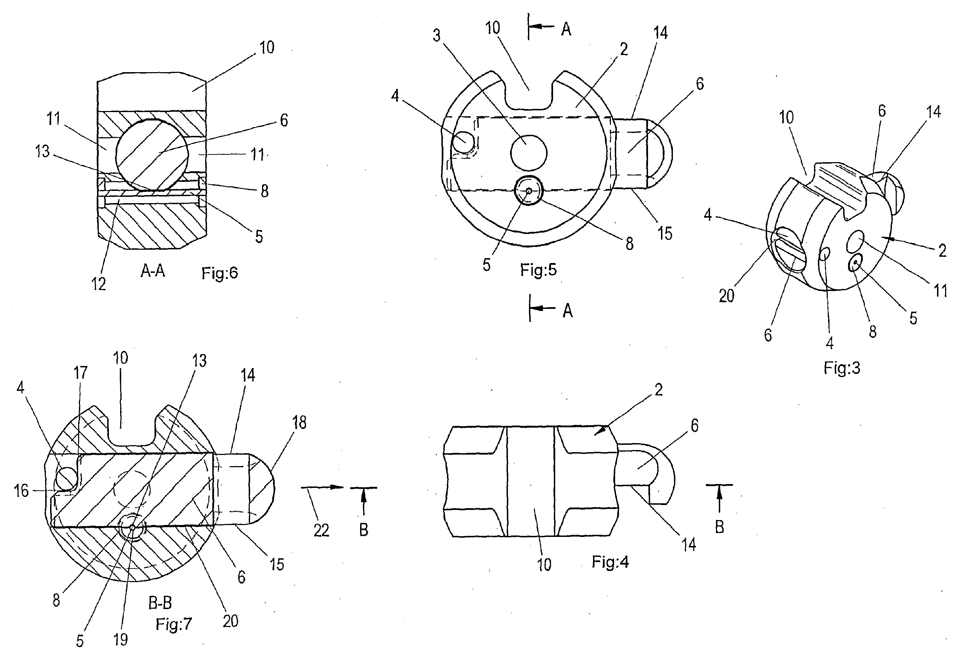

Er legt sich gem. Figur 6 an der Unterseite des Stabmessers 6 an, die dort abgeflacht ist und eine Haltekerbe 13 ausbildet.

Die beiden Lagerbolzen 3 sind verschiebungsgesichert in der zugeordneten Querbohrung 7 im Grundkörper 1 gelagert und greifen beidseits in die zugeordneten Bohrungen 11 im Messerhalter 2 ein.

Damit ist eine eindeutige Zuordnung und ein Spiel bei Drehlagerung des Messerhalters 2 im Grundkörper 1 gewährleistet.

Die Lagerbolzen 3 sind gegen Herausfallen beispielsweise mittels einer Klebstoffschicht 9 stirnseitig am Messerhalter 2 im Bereich der Querbohrung 7 gehalten.

Statt einer Klebstoffschicht können auch andere Maßnahmen verwendet werden wie z. B. das Einpressen der Lagerbolzen 3 in die zugeordnete Querbohrung 7 im Grundkörper 1.

Im Prinzip müssen die Lagerbolzen 3 nicht ausgewechselt werden, denn es ist ein Merkmal der vorliegenden Erfindung, dass der Messerhalter 2 mit seiner Drehlagerung stets im Grundkörper 1 verbleibt und lediglich das Stabmesser 6 auswechselbar ist.

Sollte jedoch dennoch einmal ein Messerhalter 2 ausgetauscht werden, kann einfach das Stabmesser 6 unter Überwindung der Auszugssicherung herausgezogen werden, wodurch die Aufnahmebohrung 20 frei wird. Es können dann die Lagerbolzen 3 leicht herausgeschlagen werden, denn durch einen Schlag auf einen einzigen Lagerbolzen, wird dieser durch die Aufnahmebohrung 20 hindurchgetrieben, trifft auf den gegenüberliegenden Lagerbolzen 3 und treibt diesen ebenfalls aus seiner Querbohrung 7 im Grundkörper 1 heraus.

In an sich bekannter Weise weist der Messerhalter 2 an seinem Außenumfang eine Steuerausnehmung 10 auf, in die eine nicht näher dargestellte Biegefeder eingreift und die Verdrehung des Messerhalters 2 im Grundkörper 1 steuert.

Das Stabmesser 6 weist einander gegenüber liegende Schneidkanten 14, 15 auf und die Stirnseite wird durch einen Gleitradius 18 gebildet.

Wichtig bei der vorliegenden Erfindung ist dem gemäß die einfache Auswechselbarkeit des Stabmessers 2, weil einfach durch Zug in Pfeilrichtung 22 auf das Stabmesser 6 der Federstab 5 sich durchbiegt, sich von der Haltekerbe 13 entfernt und somit das Stabmesser 6 in Pfeilrichtung 22 aus der Aufnahmebohrung 20 im Messerhalter 2 herausgezogen werden kann.

Statt des hier gezeigten Positionierbolzen 4, der sich an zwei senkrecht zueinander stehenden Zentrierkanten 16, 17 anlegt, können auch andere Zentriermittel verwendet werden. Beispielsweise kann der Positionierbolzen 4 an der Oberseite des Stabmessers in eine zugeordnete Anschlagkante eingreifen oder er könnte auch senkrecht zu seiner eingezeichneten Lage an einer anderen Stelle am Stabmesser 6 positionierend anliegen.

Die Figuren 8 bis 11 zeigen eine weitere Ausführungsform der Lagerung eines Stabmessers 6 in einem Messerhalter 2. Hier sind die Auszugssicherung und die Anschlagbegrenzung in einem einzigen Bauteil vereinigt. In der Querbohrung 7 ist eine C.-förmige Feder 25 angeordnet, die sich mit ihrem mittigen Federschenkel 29 an der Innenseite einer in Auszugsrichtung 30 angeschrägten Haltekerbe 33 anlegt. Gem. Figur 10 ist die linke Flanke 30 der Haltekerbe 33 im wesentlichen vertikal zu Auszugsrichtung 30 ausgerichtet, während die rechte Flanke 24 schräg zu Auszugsrichtung 30 geneigt ist.

Dies führt dazu, dass bei der Belastung des Stabmessers 6 in Pfeilrichtung 22 der Federschenkel 29 sich am linken Anschlag 27 der Flanke 23 angelegt und ein Ausziehen des Stabmessers in dieser Pfeilrichtung nicht möglich ist.

Soll hingegen das Stabmessers 6 ausgewechselt werden, dann wird das Stabmesser 6 in Auszugsrichtung 30 bewegt und der mittigen Federschenkel 29 gleitet an dem rechten Anschlag 28 der Haltekerbe 33 entlang und wird dort um den Federweg 26 nach unten abgelenkt. Damit gelangt der Federschenkel 29 außer Eingriff mit der Haltekerbe 33 und das Stabmesser kann in Auszugsrichtung 30 aus dem Messerhalter 2 herausgezogen werden. Die Formgebung der C-förmigen Feder 25 und die Durchbiegung des mittigen Federschenkels 29 sind in Figur 11 dargestellt.

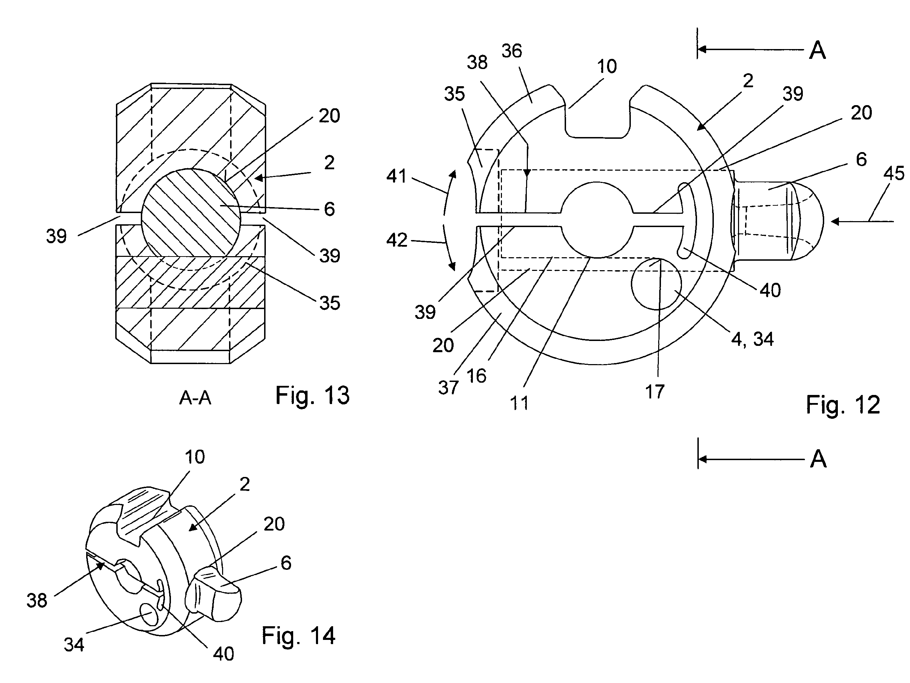

In den Figuren 12 bis 17 wird ein Messerhalter dargestellt, der mit seinen Grundmerkmalen mit dem Messerhalter 2 nach den Figuren 1 bis 11 übereinstimmt. Deshalb wurden für die gleichen Teile die gleichen Bezugszeichen verwendet.

Insbesondere wird das Stabmesser 6 mit dem Lagerbolzen 3 genau in der gleichen Weise gehalten wie vergleichsweise in dem Ausführungsbeispiel nach den Figuren 1 bis 11.

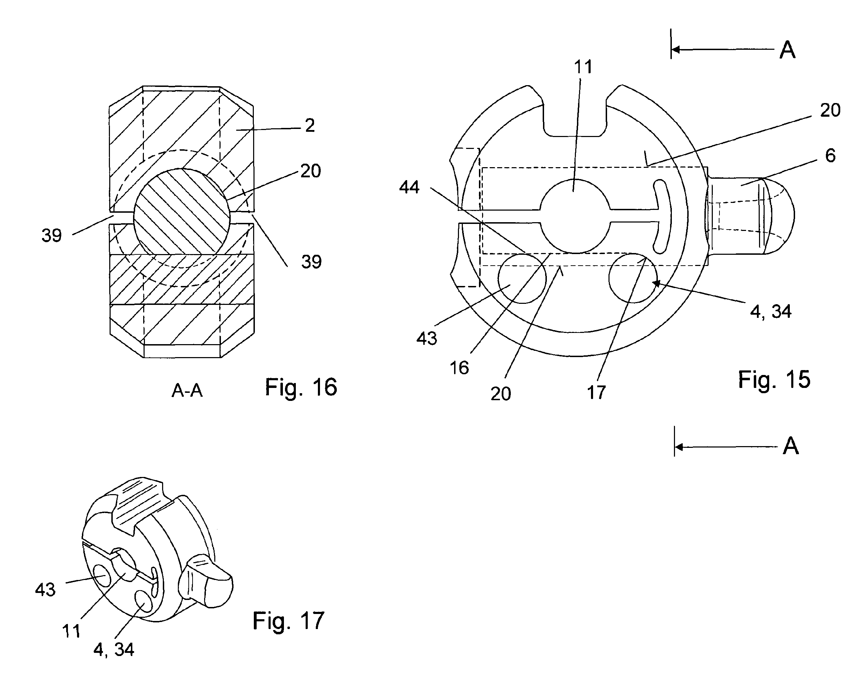

Im Unterschied zu diesen vorher genannten Ausführungsbeispielen zeichnet sich die Figur 12 und 15 nun dadurch aus, dass der Messerhalter 2 nunmehr einen etwa zwei Drittel der Gesamtlänge durchsetzenden Klemmspalt 38 aufweist, so dass der Messerhalter 2 nunmehr als Klemmkörper ausgebildet ist.

Der einseitig offene Klemmspalt 38 erstreckt sich von der einen Seite des Messerhalters her in Form eines Längsschlitzes 39, der in die Bohrung 11 für den Einsatz der Lagerbolzen 3 übergeht und diese Bohrung 11 schneidet.

Jenseits dieser Bohrung 11 setzt sich der Klemmspalt 38 in Form des Klemmschlitzes 39 fort und endet dort in einer Erweiterung 40, die quer zur Längsachse des Längsschlitzes 39 verläuft. Diese Erweiterung 40 kann eine in weiten Grenzen veränderbare Formgebung aufweisen und soll nur Bruchspannungen auf das Ende des Längsschlitzes 39 beim Spreizen der beiden Klemmhälften 36, 37 wegnehmen. Dass heißt, die Erweiterung kann auch gerade ausgebildet sein, bogenförmig oder auch als Bohrung ausgebildet sein, die einseitig geöffnet in den Längsschlitz 39 übergeht.

Das Stabmesser 6 wird von vorne her (d. h. also in Figur 12 von der rechten Seite aus) in Richtung seiner Längsachse in die nun als klemmende Aufnahmebohrung 20 ausgebildete Aufnahmebohrung eingesteckt, wodurch sich die beiden Klemmhälften 36, 38 auseinanderspreizen, weil der Außendurchmesser des Stabmessers 6 geringfügig größer ist als vergleichsweise der Innendurchmesser der Aufnahmebohrung 20.

Um das Einstecken des Stabmessers 6 in die Aufnahmebohrung 20 zu erleichtern, ist es vorgesehen, dass in den Bereich einer hinteren Ausnehmung 35 ein Spreizwerkzeug eingesetzt wird, welches die beiden Klemmhälften 36, 37 in den Pfeilrichtungen 41, 42 auseinanderspreizt, um so die Aufnahmebohrung 20 im Durchmesser zu vergrößern und hierdurch ein glattes und sichereres Einstecken des Stabmessers 6 zu ermöglichen.

Die Sicherung gegen eine axiale Begrenzung beim Einstecken des Stabmessers 6 erfolgt hierbei durch den vorher bei den anderen Ausführungsformen bereits schon erwähnten Positionierbolzen 4, der nunmehr in eine Bohrung 34 eingesteckt wird, welche Bohrung nun im vorderen Teil des Messerhalters angeordnet ist und nicht mehr im hinteren Teil, wie es bei den Ausführungsformen nach den Figuren 1 bis 11 beschrieben wurde.

Somit bildet der Positionierbolzen 4 einen Anschlag an der Anschlagkante 17 des Stabmessers 6, so dass dieses gegen axiales Hineinstoßen gesichert ist.

Der Positionierbolzen 4 mit der Anschlagkante 17 dient also zur axialen Begrenzung und Positionierung beim Einschieben in Pfeilrichtung 45 des Stabmessers 6 in die Aufnahmebohrung 20.

Als Sicherung gegen axiales Herausziehen in Gegenrichtung zur Pfeilrichtung 45 dient der Klemmspalt 38, der die Aufnahmebohrung 20 dergestalt schließt, dass das Stabmesser 6 klemmend in der Aufnahmebohrung 20 aufgenommen ist.

Als weitere Sicherung gegen Herausfallen in Gegenrichtung zur Pfeilrichtung 45 ist in den Figuren 15 bis 17 noch als weitere Maßnahme dargestellt, dass in eine Bohrung 43 in der einen Klemmhälfte 37 des Messerhalters 2 ein Bolzen eingesteckt ist, der eine Haltekerbe 44 am Umfang des Stabmessers 6 schneidet und so das Stabmesser absolut sicher gegen axiales Verschieben sichert. Die Ringfläche kann ringsherum um den Umfang des Stabmessers verlaufen oder auch nur teilweise am Umfang des Stabmessers angeordnet sein.

Statt der Ringfläche kann auch nur eine Abflachung oder Abplattung vorgesehen werden, die am Umfang des Stabmessers 6 angeordnet ist, welche das Stabmesser gegen Verdrehung gesichert hält. Die Verdrehsicherung des Stabmessers erfolgt nach wie vor durch den Positionierbolzen 4 in Verbindung mit der Anschlagkante 17, und eine weitere Sicherung gegen axiale Verschiebung erfolgt durch den erwähnten Bolzen, der in die Bohrung 43 eingesteckt ist und der die Haltekerbe 44 am Umfang des Stabmessers schneidet, um dieses zusätzlich gegen axiales Verschieben sichert.
Es kann in einer anderen Ausgestaltung auch vorgesehen sein, dass der Positionierbolzen 4 entfällt und stattdessen nur noch ein Bolzen in der Bohrung 43 vorhanden ist.

### Zeichnungslegende

- 1.: Grundkörper
- 2.: Messerhalter
- 3.: Lagerbolzen
- 4.: Positionierbolzen
- 5.: Federstab
- 6.: Stabmesser
- 7.: Querbohrung (in 1)
- 8.: Federstablager
- 9.: Klebstoffschicht
- 10.: Steuerausnehmung
- 11.: Bohrung (für 3)
- 12.: Querbohrung
- 13.: Haltekerbe
- 14.: Schneidkante
- 15.: Schneidkante
- 16.: Zentrierkante
- 17.: Anschlagkante
- 18.: Gleitradius
- 19.: Auszugssicherung
- 20.: Aufnahmebohrung (für 6)
- 21.: Längsausnehmung
- 22.: Pfeilrichtung
- 23.: Flanke (links)
- 24.: Flanke (rechts)
- 25.: C-förmige Feder
- 26.: Federweg
- 27.: Anschlag (links)
- 28.: Anschlag (rechts)
- 29.: Federschenkel
- 30.: Auszugsrichtung
- 33.: Haltekerbe
- 34.: Bohrung f.Positionierbolzen 4
- 35.: Ausnehmung für Werkzeug
- 36.: Klemmhälfte
- 37.: Klemmhälfte
- 38.: Klemmspalt
- 39.: Längsschlitz
- 40.: Erweiterung
- 41.: Pfeilrichtung
- 42.: Pfeilrichtung
- 43.: Bohrung
- 44.: Haltekerbe in 6
- 45.: Pfeilrichtung

## Patentansprüche

1. Entgratmesser zum Entgraten von Bohrungsrändern gerader oder unrunder Form mit einem um seine Längsachse drehbar angetriebenen Grundkörper (1), in dem ein oder mehrere Stabmesser (6) in einem im Grundkörper (1) schwenkbar gelagerten Messerhalter (2) auswechselbar aufgenommen sind, wobei der Messerhalter (2) mindestens eine am Umfang angeordnete Steuerausnehmung (10) aufweist, in der ein Federelement eingreift, welches die Verdrehung des Messerhalters (2) im Grundkörper steuert, **dadurch gekennzeichnet, dass** zur Schwenklagerung des Messerhalters im Grundkörper der Messerhalter (2) zwei senkrecht zur Aufnahmebohrung (20) des Stabmessers (6) fluchtend einander gegenüber liegend angeordnete Bohrungen (11) aufweist, in die jeweils das eine Ende eines Lagerbolzens (3) eingreift, dessen jeweiliges anderes Ende in einer Querbohrung (7) im Grundkörper (1) aufgenommen ist und dass das eine oder mehrere Stabmesser (6) dadurch leicht auswechselbar in der radialen Aufnahmebohrung (20) im Messerhalter (2) gelagert sind, dass mindestens ein die axiale Verschiebung begrenzender Anschlag (4, 17, 18, 33) und eine in axialer Richtung sichernde Auszugssicherung (19, 33) für das Stabmesser (6) angeordnet sind.

2. Entgratmesser nach Anspruch 1, **dadurch gekennzeichnet, dass** die messerhalterseitige Anschlagkante durch einen Positionierbolzen (4) gebildet ist, der sich an zugeordneten Anschlagkanten (16, 17) des Stabmessers (6) anlegt.

3. Entgratmesser nach einem der Ansprüche 1 bis 2, **dadurch gekennzeichnet, dass** die Auszugssicherung als Federstab (5, 25) ausgebildet ist, der federnd in einer Querbohrung (12) im Messerhalter (2) gelagert ist und an einer Haltekerbe (13, 33) am Stabmesser (6) unter Federvorspannung eingreift.

4. Entgratmesser nach einem der Ansprüche 1 bis 3, **dadurch gekennzeichnet, dass** die axiale Auszugssicherung durch eine Kerbe am Stabmesser (6) gebildet ist, in welche die Spitze einer messerhalterseitig angeordnete Madenschraube eingreift.

5. Entgratmesser nach einem der Ansprüche 1 bis 3, **dadurch gekennzeichnet, dass** die Auszugssicherung als federbelastet vorgespannte Indexkugel ausgebildet ist, die von der Schraubendruckfeder federvorgespannt in die zugeordnete Haltekerbe (13) an der Unterseite des Stabmessers (6) eingreift.

6. Entgratmesser nach einem der Ansprüche 1 bis 5, **dadurch gekennzeichnet, dass** der Positionierbolzen (4) eine lastübertragende axiale Anschlagsicherung für das Stabmesser (6) ausbildet, die einerseits der Verdrehsicherung und andererseits der Verschiebungssicherung des Stabmessers (6) in der Aufnahmebohrung (20) dient

7. Entgratmesser nach einem der Ansprüche 1 bis 6, **dadurch gekennzeichnet, dass** die beiden Lagerbolzen (3) verschiebungsgesichert in der zugeordneten Querbohrung (7) im Grundkörper (1) gelagert sind und beidseits in die zugeordneten Bohrungen (11) im Messerhalter (2) eingreifen.

8. Entgratmesser nach einem der Ansprüche 1 bis 7, **dadurch gekennzeichnet, dass** die Auszugssicherung und die axiale Anschlagbegrenzung in einem einzigen Bauteil (Haltekerbe 33) vereinigt sind.

9. Entgratmesser nach Anspruch 8, **dadurch gekennzeichnet, dass** das Bauteil als schräg zur Auszugsrichtung (30) angeschrägte Haltekerbe (33) im Stabmesser (6) ausgebildet ist, in die eine in der Querbohrung (7) gelagerte Feder (25) eingreift.

10. Entgratmesser nach einem der Ansprüche 8 oder 9, **dadurch gekennzeichnet, dass** die eine Flanke (30) der Haltekerbe (33) im wesentlichen vertikal zu Auszugsrichtung (30) ausgerichtet ist, während die andere Flanke (24) schräg zu Auszugsrichtung (30) geneigt ist.

11. Entgratmesser nach einem der Ansprüche 8 bis 10, **dadurch gekennzeichnet, dass** zur Auswechslung der Stabmessers (6) eine Bewegung in Auszugsrichtung (30) erfolgt und der mittige Federschenkel (29) der Feder (25) an dem rechten Anschlag (28) der Haltekerbe (33) entlang gleitet und dort um den Federweg (26) nach unten abgelenkt wird, womit er außer Eingriff mit der Haltekerbe (33) kommt.

12. Entgratmesser zum Entgraten von Bohrungsrändern gerader oder unrunder Form mit einem um seine Längsachse drehbar angetriebenen Grundkörper (1), in dem ein oder mehrere Stabmesser (6) in einem im Grundkörper (1) schwenkbar gelagerten Messerhalter (2) auswechselbar aufgenommen sind, wobei der Messerhalter (2) mindestens eine am Umfang angeordnete Steuerausnehmung (10) aufweist, in der ein Federelement eingreift, welches die Verdrehung des Messerhalters (2) im Grundkörper steuert, **dadurch gekennzeichnet, dass** die Aufnahmebohrung (20) für die Halterung des Stabmessers (6) als das Stabmessers klemmende Bohrung ausgebildet ist.

13. Entgratmesser nach Anspruch 12, **dadurch gekennzeichnet, dass** Aufnahmebohrung (20) im Messerhalter (2) einen federnden Klemmspalt (38) aufweist.

14. Entgratmesser nach einem der Ansprüche 1 bis 13, **dadurch gekennzeichnet, dass** der einseitig offene Klemmspalt (38) sich von der einen Seite des Messerhalters her in Form eines Längsschlitzes (39) erstreckt, der in die Bohrung (11) für den Einsatz der Lagerbolzen (3) übergeht und diese Bohrung (11) schneidet.

15. Entgratmesser nach einem der Ansprüche 1 bis 14, **dadurch gekennzeichnet, dass** um das Einstecken des Stabmessers (6) in die Aufnahmebohrung (20) zu erleichtern, im Bereich einer hinteren Ausnehmung (35) am Klemmspalt (38) ein Spreizwerkzeug einsetzbar ist, welches die beiden Klemmhälften (36, 37) auseinanderspreizt, um so die Aufnahmebohrung (20) im Durchmesser zu vergrößern und hierdurch ein glattes und sichereres Einstecken des Stabmessers (6) zu ermöglichen
